# EUROPEAN PATENT APPLICATION

(11) **EP 4 790 635 A2**
(43) Date of publication of application: **12.08.2026**
(21) Application number: 26188091.8
(22) Date of filing: 26.06.2026
(51) Int. Cl.: G06T 5/00, H04N 25/611

(54) **METHOD AND APPARATUS FOR IMAGE CHROMATIC ABERRATION CORRECTION, DEVICE, AND MEDIUM**

(30) Priority: 27.03.2026 CN 202610398198
(71) Applicant: XG TECH PTE. LTD., Singapore 179098 (SG)
(72) Inventor: LIN, Tao, 179098 Singapore (SG); FAN, Man, 179098 Singapore (SG)
(74) Representative: Patentanwälte Magenbauer & Kollegen Partnerschaft mbB

(57) **Abstract**

The present disclosure provides a method and an apparatus for image chromatic aberration correction, a device, and a medium. A to-be-corrected image captured through a lens is acquired; axial chromatic aberration correction is performed on the to-be-corrected image based on pre-determined axial chromatic aberration calibration information of the lens to obtain a target image; and lateral chromatic aberration correction is performed on the target image based on pre-determined lateral chromatic aberration calibration information of the lens.

## Description

### TECHNICAL FIELD

The present disclosure relates to the technical field of image signal processing, and in particular, to a method and an apparatus for image chromatic aberration correction, a device, and a medium.

### BACKGROUND

In technologies related to image chromatic aberration correction, some technologies for eliminating lateral chromatic aberration of a lens consider only offset alignment of three channels: RGB (Red, Green, and Blue), resulting in unsatisfactory correction effects for lateral chromatic aberration, still with residual lateral chromatic aberration remaining, and also resulting in further deterioration of axial chromatic aberration.

### SUMMARY

To resolve the above technical problems, the present disclosure provides a method and an apparatus for image chromatic aberration correction, a device, and a medium.

According to a first aspect of embodiments of the present disclosure, there is provided a method for image chromatic aberration correction, including:
acquiring a to-be-corrected image captured through a lens;
performing axial chromatic aberration correction on the to-be-corrected image based on pre-determined axial chromatic aberration calibration information of the lens to obtain a target image; and
performing lateral chromatic aberration correction on the target image based on pre-determined lateral chromatic aberration calibration information of the lens.

According to a second aspect of embodiments of the present disclosure, there is provided an apparatus for image chromatic aberration correction, comprising:
an acquisition unit, configured for acquiring a to-be-corrected image captured through a lens;
a first correction unit, configured for performing axial chromatic aberration correction on the to-be-corrected image based on pre-determined axial chromatic aberration calibration information of the lens to obtain a target image; and
a second correction unit, configured for performing lateral chromatic aberration correction on the target image based on pre-determined lateral chromatic aberration calibration information of the lens.

According to a third aspect of the present disclosure, there is provided an electronic device, including:
a memory, configured for storing a computer program; and
a processor, configured for executing the computer program stored in the memory, and implementing, when executing the computer program, a method according to any embodiment of the above method for image chromatic aberration correction according to the first aspect of the present disclosure.

According to a fourth aspect of the present disclosure, there is provided a computer readable storage medium, on which a computer program is stored, where the computer program, when executed by a processor, causes the processor to implement a method according to any embodiment of the above method for image chromatic aberration correction according to the first aspect.

According to a fifth aspect of the present disclosure, there is provided a computer program, including computer readable program instructions, where when the computer program instructions, when executed by a processor, cause the processor to implement a method according to any embodiment of the above method for image chromatic aberration correction according to the first aspect.

Based on the embodiments of the present disclosure, a to-be-corrected image captured through a lens can be acquired, subsequently, axial chromatic aberration correction is performed on the to-be-corrected image based on pre-determined axial chromatic aberration calibration information of the lens to obtain a target image, and then, lateral chromatic aberration correction is performed on the target image based on pre-determined lateral chromatic aberration calibration information of the lens. In this way, compared with performing only single-directional chromatic aberration correction of either axial chromatic aberration correction or lateral chromatic aberration correction, performing axial chromatic aberration correction on the to-be-corrected image and then further performing lateral chromatic aberration correction on the obtained target image based on the axial chromatic aberration correction can eliminate chromatic aberration residuals from the single-direction correction. In addition, lateral chromatic aberration correction typically involves an interpolation algorithm, which is essentially a form of low-pass filtering. Consequently, lateral chromatic aberration correction typically causes blurring of R and B channels, resulting in further deterioration of axial chromatic aberration. Therefore, further performing axial chromatic aberration correction on the obtained image on the basis of lateral chromatic aberration correction can reduce accumulation and transmission of axial chromatic aberration caused by lateral chromatic aberration correction, thereby ensuring that axial chromatic aberration correction can be more effectively performed based on the axial chromatic aberration calibration information. In this way, accuracy of image chromatic aberration correction can be improved.

### BRIEF DESCRIPTION OF DRAWINGS

FIG. 1 is a diagram illustrating an exemplary application scenario applicable to the present disclosure.
FIG. 2 is a schematic flowchart illustrating a method for image chromatic aberration correction according to an exemplary embodiment of the present disclosure.
FIG. 3 is a schematic diagram illustrating a chromatic aberration formation process according to an exemplary embodiment of the present disclosure.
FIG. 4 is a schematic flowchart illustrating a method for image chromatic aberration correction according to another exemplary embodiment of the present disclosure.
FIG. 5 is a schematic flowchart illustrating a method for correcting lateral chromatic aberration according to an exemplary embodiment of the present disclosure.
FIG. 6 is a schematic flowchart illustrating a method for image chromatic aberration correction according to still another exemplary embodiment of the present disclosure.
FIG. 7 is a schematic diagram illustrating a first image according to an exemplary embodiment of the present disclosure.
FIG. 8 is a schematic diagram illustrating a second image according to an exemplary embodiment of the present disclosure.
FIG. 9 is a schematic flowchart illustrating determining of channel gradient information of a first image captured through a lens according to an exemplary embodiment of the present disclosure.
FIG. 10 is a schematic flowchart illustrating determining of centroid coordinates of an image block in a second image captured through a lens according to an exemplary embodiment of the present disclosure.
FIG. 11 is a schematic flowchart illustrating a method for performing axial chromatic aberration correction on a to-be-corrected image according to an exemplary embodiment of the present disclosure.
FIG. 12 is a schematic flowchart illustrating a method for performing lateral chromatic aberration correction on a target image according to an exemplary embodiment of the present disclosure.
FIG. 13 is a schematic flowchart illustrating determining of corrected pixel coordinates of a target channel of a target image according to an exemplary embodiment of the present disclosure.
FIG. 14 is a schematic flowchart illustrating determining of a corrected pixel value of a target channel of a target image according to an exemplary embodiment of the present disclosure.
FIG. 15 is a schematic diagram illustrating a structure of an apparatus for image chromatic aberration correction according to an exemplary embodiment of the present disclosure.
FIG. 16 is a schematic diagram illustrating a structure of an apparatus for image chromatic aberration correction according to another exemplary embodiment of the present disclosure.
FIG. 17 is a diagram illustrating a structure of an electronic device according to an exemplary embodiment of the present disclosure.

### DETAILED DESCRIPTION OF THE EMBODIMENTS

To explain the present disclosure, exemplary embodiments of the present disclosure will be described in detail below with reference to the accompanying drawings. Apparently, the described embodiments are merely some, not all, of embodiments of the present disclosure. It should be understood that, the present disclosure is not limited by the exemplary embodiments.

It should be noted that the relative arrangement of components and steps, numerical expressions, and numerical values set forth in these embodiments do not limit the scope of the present disclosure, unless otherwise specifically stated.

### Overview of Application

In a process of implementing the present disclosure, the inventors found that visible light perceived by human eyes has a wavelength range of approximately 380 nm (nanometers) to 760 nm, where blue light has a wavelength of 450 nm to 495 nm, green light has a wavelength of 495-570 nm, and red light has a wavelength of 620 nm to 760 nm.

When visible light passes through a camera lens, a longer wavelength of light indicates a higher refractive index. Light of different wavelengths has different refractive indices when passing through a lens. For most lenses, blue light has the highest refractive index, followed by green light and red light.

Light of different wavelengths focuses at different positions, causing displacement of a focal point for blue light, green light, and red light. This displacement occurs in two directions: parallel to the focal plane and perpendicular to the focal plane. Chromatic aberration caused by displacement parallel to the focal plane is referred to as lateral chromatic aberration, while chromatic aberration caused by displacement perpendicular to the focal plane is referred to as axial chromatic aberration (longitudinal chromatic aberration).

Generally, lateral chromatic aberration is the most common and noticeable, but axial chromatic aberration also has a significant impact. Moreover, as a focal length of the lens continues to increase, the impact of axial chromatic aberration becomes increasingly greater.

Some technologies for eliminating lateral chromatic aberration of a lens consider only offset alignment of three channels: RGB (Red, Green, and Blue), resulting in unsatisfactory correction effects for lateral chromatic aberration, still with residual lateral chromatic aberration remaining, and also resulting in further deterioration of axial chromatic aberration. In some technologies for removing axial chromatic aberration, the problem can be resolved from the perspective of lens design and correction, or the chromatic aberration is simply treated as purple fringing and the chromatic aberration is removed by removing the purple fringing in a YUV (Luminance Chrominance) domain.

### Exemplary Overview

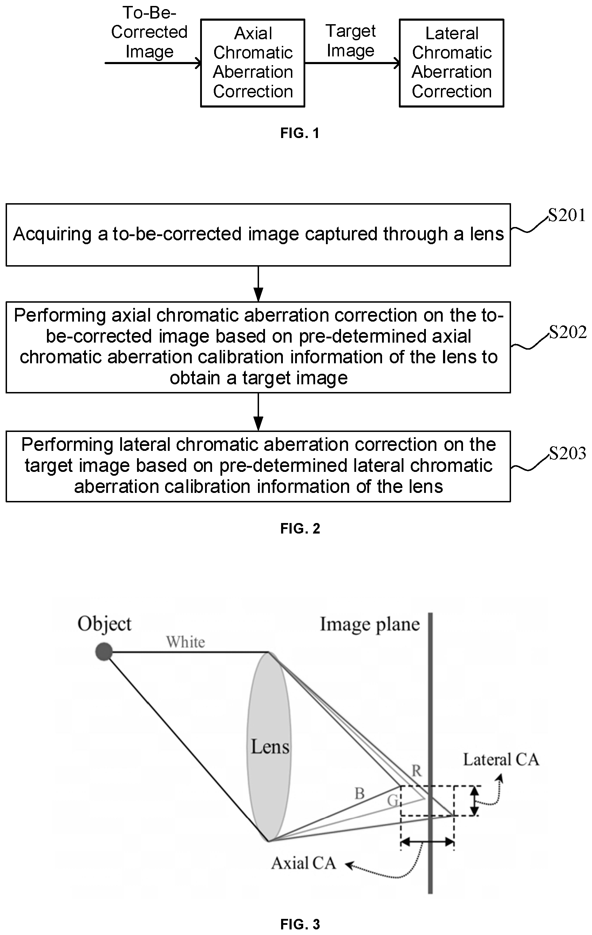

FIG. 1 is a diagram illustrating an exemplary application scenario applicable to the present disclosure.

In any scenario requiring image chromatic aberration correction, such as automated driving, industrial inspection, security monitoring, and medical imaging, a method for image chromatic aberration correction in the present disclosure can be used to perform chromatic aberration correction on a to-be-corrected image to improve image quality.

Specifically, using an automated driving scenario as an example, axial chromatic aberration calibration information and lateral chromatic aberration calibration information of a lens disposed on a camera of a vehicle can be pre-determined, and any image captured by the lens can be used as a to-be-corrected image. After the camera of the vehicle in the automated driving scenario acquires the to-be-corrected image, axial chromatic aberration correction can first be performed on the to-be-corrected image based on the above axial chromatic aberration calibration information to obtain a target image. Subsequently, the vehicle further performs lateral chromatic aberration correction on the target image based on the above lateral chromatic aberration calibration information to obtain a corrected image.

In some optional implementations, the method for image chromatic aberration correction can be specifically implemented using an ASIC (Application-Specific Integrated Circuit), an FPGA (Field-Programmable Gate Array), or a CPU (Central Processing Unit).

Optionally, the vehicle can further perform visual environment perception, vehicle positioning, multisensor fusion, path planning, vehicle control, and the like based on the corrected image, thereby achieving automated driving.

Based on this, compared with performing only single-directional chromatic aberration correction of either axial chromatic aberration correction or lateral chromatic aberration correction, performing axial chromatic aberration correction on the to-be-corrected image and then further performing lateral chromatic aberration correction on the obtained target image based on the axial chromatic aberration correction can eliminate chromatic aberration residuals from the single-direction correction. In addition, lateral chromatic aberration correction typically involves an interpolation algorithm, which is essentially a form of low-pass filtering. Consequently, lateral chromatic aberration correction typically causes blurring of R and B channels, resulting in further deterioration of axial chromatic aberration. Therefore, further performing axial chromatic aberration correction on the obtained image on the basis of lateral chromatic aberration correction can reduce accumulation and transmission of axial chromatic aberration caused by lateral chromatic aberration correction, thereby ensuring that axial chromatic aberration correction can be more effectively performed based on the axial chromatic aberration calibration information. In this way, accuracy of image chromatic aberration correction can be improved.

### Exemplary Method

FIG. 2 is a schematic flowchart illustrating a method for image chromatic aberration correction according to an exemplary embodiment of the present disclosure. This embodiment may be applied to an electronic device, for example, an intelligent driving vehicle. As shown in FIG. 2, the method includes the following steps:
Step 201: Acquiring a to-be-corrected image captured through a lens.

The lens may be a lens of any camera. When visible light passes through a lens, a longer wavelength of light indicates a higher refractive index. Light of different wavelengths has different refractive indices when passing through a lens. For most lenses, blue light has the highest refractive index, followed by green light and red light. In some optional embodiments, the lens may be disposed on a camera of an intelligent driving vehicle.

The to-be-corrected image may be any image captured by the lens and on which chromatic aberration correction (including lateral chromatic aberration correction and axial chromatic aberration correction) is to be performed. In some optional embodiments, the to-be-corrected image may be an RGB image. Typically, the to-be-corrected image may include lateral chromatic aberration and axial chromatic aberration.

Herein, causes of chromatic aberration are explained with reference to FIG. 3:

In FIG. 3, Lateral CA represents lateral chromatic aberration, and Axial CA represents axial chromatic aberration. As can be seen from FIG. 3, the occurrence of lateral chromatic aberration results from different wavelengths focusing at different positions on an imaging plane, and lateral chromatic aberration at edges of an image is particularly noticeable compared to that in a central region of the image. Generally, a longer distance from a center point indicates severer lateral chromatic aberration. The occurrence of axial chromatic aberration results from different wavelengths focusing at different positions on an axial line of the lens. Generally, the G channel is focused clearly as a priority, while the R and B channels are not focused clearly. Generally, the axial chromatic aberration is the same at different positions of the image.

In some optional embodiments, after the lens captures the to-be-corrected image, the to-be-corrected image may be directly transmitted to the above electronic device. In this way, the electronic device can directly acquire the to-be-corrected image captured through the lens. Alternatively, after the lens captures the to-be-corrected image, the to-be-corrected image may be transmitted to a preset storage space. In this way, the electronic device can indirectly acquire, from the above storage space, the to-be-corrected image captured through the lens.

Step 202: Performing axial chromatic aberration correction on the to-be-corrected image based on pre-determined axial chromatic aberration calibration information of the lens to obtain a target image.

The axial chromatic aberration calibration information can be used for axial chromatic aberration correction of an image (including the to-be-corrected image). The axial chromatic aberration calibration information represents sharpness differences between different color channels (the R and B channels relative to the G channel) caused by axial chromatic aberration. As an example, the axial chromatic aberration calibration information can be determined based on a high-frequency component HF_R of the R channel, a high-frequency component HF_G of the G channel, and a high-frequency component HF_B of the B channel. For example, the axial chromatic aberration calibration information may include at least one of the following: HF_G/HF_R or HF_G/HF_B.

The axial chromatic aberration correction can be used for correcting sharpness of each of the R channel and the B channel to make them approach sharpness of the G channel. Herein, it typically needs to be ensured that the G channel is in sharp focus when the lens is focused, and it is difficult for the R channel and the B channel to be in sharp focus due to the problem of axial chromatic aberration. Therefore, the correction of axial chromatic aberration herein can be processing the R channel and the B channel to cause the sharpness of each of the R channel and the B channel to approach the sharpness of the G channel.

The target image may be an image directly or indirectly obtained after axial chromatic aberration correction is performed on the to-be-corrected image.

In some optional implementations, in a case that the axial chromatic aberration calibration information includes HF_G/HF_R, axial chromatic aberration correction can be performed on the to-be-corrected image through HF_G/HF_R to obtain the target image. For example, a pixel value of the R channel in the target image = a pixel value of the R channel in the to-be-corrected image + the high-frequency component HF_R_Local of the R channel × HF_G/HF_R, where HF_R_Local is also referred to as a fourth high-frequency component below.

In some optional implementations, in a case that the axial chromatic aberration calibration information includes HF_G/HF_B, axial chromatic aberration correction can be performed on the to-be-corrected image through HF_G/HF_B to obtain the target image. For example, a pixel value of the B channel in the target image = a pixel value of the B channel in the to-be-corrected image + the high-frequency component HF_B_Local of the B channel × HF_G/HF_B, where HF_B_Local is also referred to as a fifth high-frequency component below.

Step 203: Performing lateral chromatic aberration correction on the target image based on pre-determined lateral chromatic aberration calibration information of the lens.

The lateral chromatic aberration calibration information can be used for lateral chromatic aberration correction of an image (including the to-be-corrected image). The lateral chromatic aberration calibration information can represent pixel position offsets caused by lateral chromatic aberration between different color channels (the R and B channels relative to the G channel) on the imaging plane. As an example, the lateral chromatic aberration calibration information may include at least one of the following: coordinate differences between a centroid of the R channel and a centroid of the G channel, and coordinate differences between a centroid of the B channel and the centroid of the G channel.

The lateral chromatic aberration correction can be used for performing coordinate offset correction on each pixel in the target image.

In some optional implementations, a block-based method can be used to correct lateral chromatic aberration in the target image.

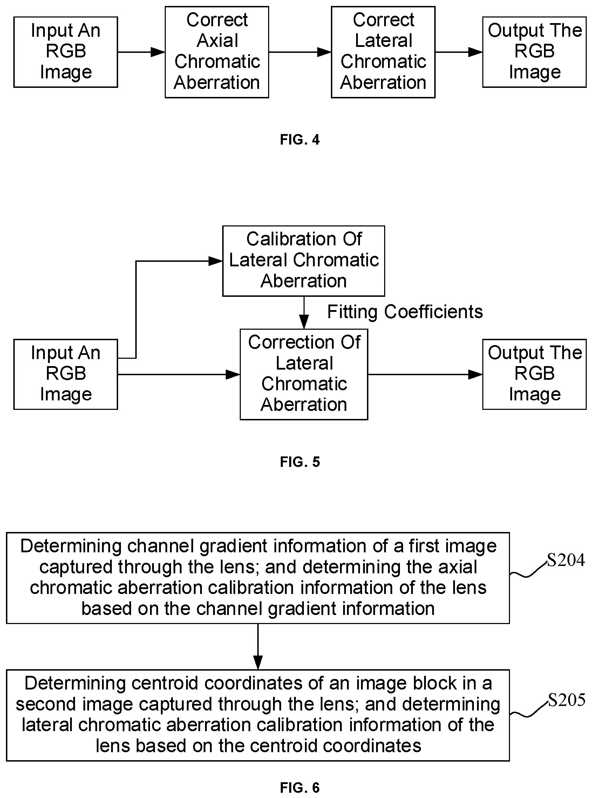

In some optional implementations, as shown in FIG. 4, an input RGB image can be used as the to-be-corrected image, and its axial chromatic aberration is first corrected, and subsequently, lateral chromatic aberration is further corrected based on the axial chromatic aberration correction, thereby outputting a corrected RGB image.

In some optional implementations, referring to FIG. 5, fitting coefficients (that is, lateral chromatic aberration calibration information) can be obtained through lateral chromatic aberration calibration. In this way, an RGB image that has undergone axial chromatic aberration calibration can be used as the input RGB image, and lateral chromatic aberration correction is performed thereon based on the above fitting coefficients, thereby outputting a corrected RGB image.

Based on this embodiment of the present disclosure, a to-be-corrected image captured through a lens can be acquired, subsequently, axial chromatic aberration correction is performed on the to-be-corrected image based on pre-determined axial chromatic aberration calibration information of the lens to obtain a target image, and then, lateral chromatic aberration correction is performed on the target image based on pre-determined lateral chromatic aberration calibration information of the lens. In this way, compared with performing only single-directional chromatic aberration correction of either axial chromatic aberration correction or lateral chromatic aberration correction, performing axial chromatic aberration correction on the to-be-corrected image and then further performing lateral chromatic aberration correction on the obtained target image based on the axial chromatic aberration correction can eliminate chromatic aberration residuals from the single-direction correction. In addition, lateral chromatic aberration correction typically involves an interpolation algorithm, which is essentially a form of low-pass filtering. Consequently, lateral chromatic aberration correction typically causes blurring of R and B channels, resulting in further deterioration of axial chromatic aberration. Therefore, further performing axial chromatic aberration correction on the obtained image on the basis of lateral chromatic aberration correction can reduce accumulation and transmission of axial chromatic aberration caused by lateral chromatic aberration correction, thereby ensuring that axial chromatic aberration correction can be more effectively performed based on the axial chromatic aberration calibration information. In this way, accuracy of image chromatic aberration correction can be improved.

In some optional embodiments, as shown in FIG. 6, based on the above embodiment shown in FIG. 2, before step 202, the following steps may be included:

Step 204: Determining channel gradient information of a first image captured through the lens; and determining the axial chromatic aberration calibration information of the lens based on the channel gradient information.

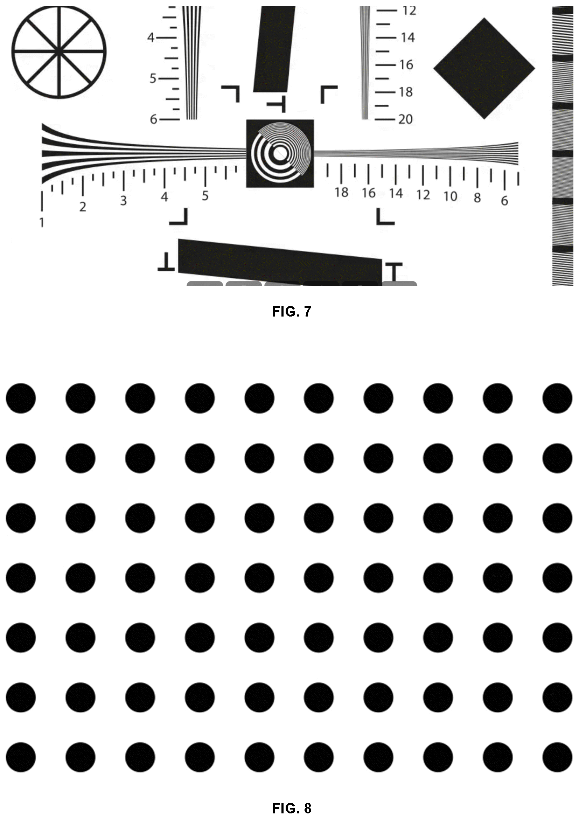

The first image can be used for axial chromatic aberration calibration. The first image can be any image. In some optional implementations, the first image may be an image captured using an ISO 12233 resolution chart, as shown in FIG. 7.

The channel gradient information can represent a gradient of a channel. As an example, the channel gradient information may include at least one of the following: a gradient of the R channel, a gradient of the G channel, or a gradient of the B channel.

In some optional implementations, the gradient of a channel (including the gradient of the R channel, the gradient of the G channel, and the gradient of the B channel) can be a high-frequency component of the channel calculated through a Laplacian sharpening operator (for example, [0, -1, 0; -1, 4, -1; 0, -1, 0]).

In some optional implementations, the gradient of a channel (including the gradient of the R channel, the gradient of the G channel, and the gradient of the B channel) may alternatively be calculated using a Sobel operator or a Canny operator.

In some optional implementations, the channel gradient information can be determined as the axial chromatic aberration calibration information of the lens. Alternatively, the axial chromatic aberration calibration information of the lens can be obtained by calculation based on the channel gradient information.

Step 205: Determining centroid coordinates of an image block in a second image captured through the lens; and determining lateral chromatic aberration calibration information of the lens based on the centroid coordinates.

The second image can be used for lateral chromatic aberration calibration. The second image can be any image. The second image and the first image may be the same or different. In some optional implementations, the second image may be a black dot image as shown in FIG. 8.

The image block may be an image region obtained by dividing the second image.

The centroid coordinates can represent a center-of-gravity position of the image block.

In some optional implementations, the centroid coordinates of the image block can be determined based on pixel values of one or more pixels in the image block.

In some optional implementations, inter-channel coordinate deviations can be determined based on the centroid coordinates, and then the lateral chromatic aberration calibration information of the lens can be determined based on the coordinate deviations.

In some methods, a polynomial fitting approach is used to correct lateral chromatic aberration based on an image radius, but the lens is not strictly symmetrical in vertical and horizontal directions. Therefore, in this embodiment, a block-based method is used for performing lateral chromatic aberration correction. This allows precise calibration for lateral chromatic aberration characteristics of different image blocks. Considering that the lens is not strictly symmetrical in the vertical and horizontal directions, compared with an overall polynomial fitting method, the block-based calibration method can improve accuracy of lateral chromatic aberration calibration and correction.

In some optional embodiments, based on the above embodiment shown in FIG. 6, the determining the lateral chromatic aberration calibration information of the lens based on the centroid coordinates in step 205 may include the following steps:

Step 1: Determining a horizontal coordinate offset and a vertical coordinate offset that correspond to a target channel of an image block of the lens based on the centroid coordinates, the target channel being a red channel or a blue channel.

The horizontal coordinate offset may be an offset between a horizontal coordinate in centroid coordinates of the target channel of the image block and a horizontal coordinate in centroid coordinates of the green channel.

The vertical coordinate offset may be an offset between a vertical coordinate in the centroid coordinates of the target channel of the image block and a vertical coordinate in the centroid coordinates of the green channel.

In some optional implementations, a difference between the horizontal coordinate in the centroid coordinates of the target channel and the horizontal coordinate in the centroid coordinates of the green channel can be determined as the horizontal coordinate offset. A difference between the vertical coordinate in the centroid coordinates of the target channel and the vertical coordinate in the centroid coordinates of the green channel can be determined as the vertical coordinate offset.

In some optional implementations, the horizontal coordinate offset can also be determined based on the difference between the horizontal coordinate in the centroid coordinates of the target channel and the horizontal coordinate in the centroid coordinates of the green channel, as well as a pre-determined horizontal coordinate calibration amount. The vertical coordinate offset can be determined based on the difference between the vertical coordinate in the centroid coordinates of the target channel and the vertical coordinate in the centroid coordinates of the green channel, as well as a pre-determined vertical coordinate calibration amount.

Step 2: Determining lateral chromatic aberration calibration information of the image block based on the horizontal coordinate offset and the vertical coordinate offset.

In some optional implementations, the horizontal coordinate offset and the vertical coordinate offset can be determined as the lateral chromatic aberration calibration information of the image block.

In some optional implementations, the horizontal coordinate offset and the vertical coordinate offset can also be calibrated through a pre-determined calibration amount, thereby obtaining the lateral chromatic aberration calibration information of the image block.

Based on this embodiment of the present disclosure, through determining of the horizontal coordinate offset and the vertical coordinate offset that correspond to the target channel of the image blocks of the lens based on the centroid coordinates, position offsets of the red channel and the blue channel relative to the green channel within each image block can be quantified. Through determining of the lateral chromatic aberration calibration information of the image block based on the horizontal coordinate offset and the vertical coordinate offset, a block-based correction policy can be supported by associating the lateral chromatic aberration calibration information with specific image block spatial positions, which can adapt to spatial variation characteristics of lateral chromatic aberration caused by lens asymmetry, thereby improving pertinence and accuracy of lateral chromatic aberration correction and avoiding correction errors caused by the overall polynomial fitting method due to lens asymmetry.

In some optional embodiments, the centroid coordinates include: a first centroid horizontal coordinate of the red channel and a first centroid vertical coordinate of the red channel, a second centroid horizontal coordinate of the green channel and a second centroid vertical coordinate of the green channel, and a third centroid horizontal coordinate of the blue channel and a third centroid vertical coordinate of the blue channel.

The first centroid horizontal coordinate is a horizontal coordinate in the centroid coordinates of the red channel, which can be denoted as Xr.

The first centroid vertical coordinate may be a vertical coordinate in the centroid coordinates of the red channel, which can be denoted as Yr.

The second centroid horizontal coordinate may be a horizontal coordinate in the centroid coordinates of the green channel, which can be denoted as Xg.

The second centroid vertical coordinate may be a vertical coordinate in the centroid coordinates of the green channel, which can be denoted as Yg.

The third centroid horizontal coordinate may be a horizontal coordinate in the centroid coordinates of the blue channel, which can be denoted as Xb.

The third centroid vertical coordinate may be a vertical coordinate in the centroid coordinates of the blue channel, which can be denoted as Yb.

On this basis, the determining a horizontal coordinate offset and a vertical coordinate offset that correspond to a target channel of an image block of the lens based on the centroid coordinates may include the following steps:
Step 1: Determining a first horizontal coordinate offset of the red channel of the image block of the lens based on the first centroid horizontal coordinate and the second centroid horizontal coordinate.

The first horizontal coordinate offset can represent an offset of the first centroid horizontal coordinate relative to the second centroid horizontal coordinate.

In some optional implementations, the first horizontal coordinate offset deltaXr = Xr - Xg.

Step 2: Determining a first vertical coordinate offset of the red channel of the image block based on the first centroid vertical coordinate and the second centroid vertical coordinate.

The first vertical coordinate offset can represent an offset of the first centroid vertical coordinate relative to the second centroid vertical coordinate.

In some optional implementations, the first vertical coordinate offset deltaYr = Yr - Yg.

Step 3: Determining a second horizontal coordinate offset of the blue channel of the image block based on the third centroid horizontal coordinate and the second centroid horizontal coordinate.

The second horizontal coordinate offset can represent an offset of the third centroid horizontal coordinate relative to the second centroid horizontal coordinate.

In some optional implementations, the second horizontal coordinate offset deltaXb = Xb - Xg.

Step 4: Determining a second vertical coordinate offset of the blue channel of the image block based on the second centroid vertical coordinate and the third centroid vertical coordinate.

The second vertical coordinate offset can represent an offset of the second centroid vertical coordinate relative to the third centroid vertical coordinate.

In some optional implementations, the second vertical coordinate offset deltaYb = Yb - Yg.

In some optional implementations, the first horizontal coordinate offset and the first vertical coordinate offset are both in a range of [-7, 7], are both decimal numbers, and can be retained with a precision of seven decimal places, that is, a floating-point chromatic aberration value is magnified by 128 times and stored in a range of [-512, 511], requiring 10 bits. Because the image has M×N blocks, there are M×N×4 calibration values.

Based on this embodiment of the present disclosure, through determining of the first horizontal coordinate offset of the red channel of the image block of the lens based on the first centroid horizontal coordinate and the second centroid horizontal coordinate, an offset of the red channel in a horizontal direction relative to the green channel can be more accurately calculated. This offset reflects a horizontal position deviation of the red channel caused by lateral chromatic aberration. Through determining of the first vertical coordinate offset of the red channel of the image block based on the first centroid vertical coordinate and the second centroid vertical coordinate, an offset of the red channel in a vertical direction relative to the green channel can be more accurately calculated. This offset reflects a vertical position deviation of the red channel caused by lateral chromatic aberration. Through determining of the second horizontal coordinate offset of the blue channel of the image block based on the third centroid horizontal coordinate and the second centroid horizontal coordinate, an offset of the blue channel in the horizontal direction relative to the green channel can be more accurately calculated. This offset reflects a horizontal position deviation of the blue channel caused by lateral chromatic aberration. Through determining of the second vertical coordinate offset of the blue channel of the image block based on the second centroid vertical coordinate and the third centroid vertical coordinate, an offset of the blue channel in the vertical direction relative to the green channel can be more accurately calculated. This offset reflects a vertical position deviation of the blue channel caused by lateral chromatic aberration. Furthermore, through separate calculation of the horizontal and vertical coordinate offsets of the red channel and the blue channel relative to the green channel, lateral chromatic aberration characteristics of each image block can be comprehensively quantified, and lateral chromatic aberration can be decomposed into independent parameters in the horizontal and vertical directions, thereby enabling finer correction processing. In this way, a color fringing phenomenon caused by optical characteristics of the lens can be alleviated to a greater extent, thereby improving edge sharpness and color accuracy of the image.

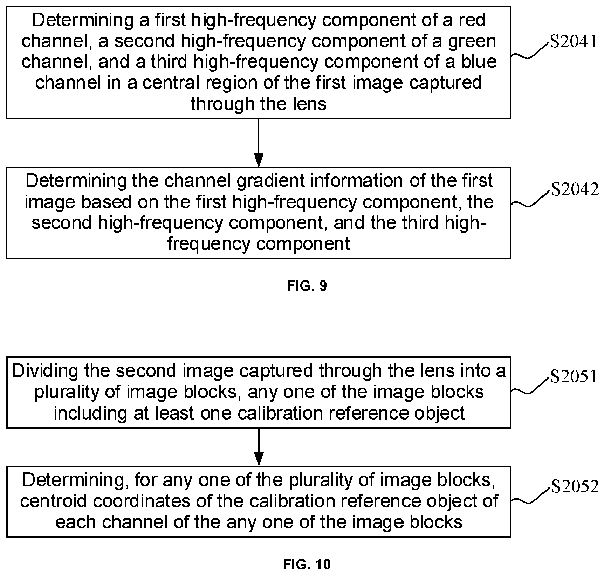

In some optional embodiments, as shown in FIG. 9, based on the above embodiment shown in FIG. 6, step 204 may include the following steps:
Step 2041: Determining a first high-frequency component of a red channel, a second high-frequency component of a green channel, and a third high-frequency component of a blue channel in a central region of the first image captured through the lens.

The central region of the first image may be a region within a center coordinate range (for example, a horizontal coordinate range (10, 50) and a vertical coordinate range (10, 50)) of the first image. This region is selected because axial chromatic aberration is global and an impact of lateral chromatic aberration in this region is small, thereby preventing an impact of the lateral chromatic aberration on the axial chromatic aberration.

The first high-frequency component may be a high-frequency component of the red channel, which can be denoted as HF_R. In some optional implementations, the first high-frequency component HF_R can be calculated through a Laplacian sharpening operator.

The second high-frequency component may be a high-frequency component of the green channel, which can be denoted as HF_G. In some optional implementations, the second high-frequency component HF_G can be calculated through a Laplacian sharpening operator.

The third high-frequency component may be a high-frequency component of the blue channel, which can be denoted as HF_B. In some optional implementations, the third high-frequency component HF_B can be calculated through a Laplacian sharpening operator.

Step 2042: Determining the channel gradient information of the first image based on the first high-frequency component, the second high-frequency component, and the third high-frequency component.

In some optional implementations, the first high-frequency component, the second high-frequency component, and the third high-frequency component can be used as the channel gradient information of the first image. Alternatively, the channel gradient information of the first image is obtained through calculation based on the first high-frequency component, the second high-frequency component, and the third high-frequency component.

Based on this embodiment of the present disclosure, through determining of the first high-frequency component of the red channel, the second high-frequency component of the green channel, and the third high-frequency component of the blue channel in the central region of the first image captured through the lens, high-frequency detail information of each channel in the central region of the first image can be obtained. Because the impact of lateral chromatic aberration in the central region is relatively small, these high-frequency components can more accurately reflect axial chromatic aberration characteristics. Through determining of the channel gradient information of the first image based on the first high-frequency component, the second high-frequency component, and the third high-frequency component, the high-frequency components (the first high-frequency component, the second high-frequency component, and the third high-frequency component) can be used as indicators for measuring sharpness of each channel, providing a basis for axial chromatic aberration correction. Because axial chromatic aberration is mainly manifested as sharpness differences between different channels, the method of this embodiment of the present disclosure can make the correction more targeted.

In some optional embodiments, as shown in FIG. 10, based on the above embodiment shown in FIG. 6, step 205 may include the following steps:
Step 2051: Dividing the second image captured through the lens into a plurality of image blocks, any one of the image blocks including at least one calibration reference object.

The image block may be an image region obtained by dividing the second image. In some optional implementations, each image block includes one and only one calibration reference object.

The calibration reference object may be a reference object, in the second image, used for lateral chromatic aberration calibration.

In some optional embodiments, the image shown in FIG. 8 can be used as the second image. In this way, it can be divided into 7×10 image blocks, ensuring that each image block has one black dot.

Step 2052: Determining, for any one of the plurality of image blocks, centroid coordinates of the calibration reference object of each channel of the any one of the image blocks.

The centroid coordinates may be coordinates of the center-of-gravity position of the calibration reference object of each channel in the image block.

In some optional embodiments, the block image can be binarized, for example, a threshold is set to distinguish a target from a background, with a pixel value of a region of the target being 1 and that of the background being 0. In this way, the centroid coordinates of the calibration reference object of each channel of the image block can be calculated through average coordinate values.

Based on this embodiment of the present disclosure, through division of image blocks and calculation of centroid coordinates of each channel, a mapping relationship between a spatial position of the lens and lateral chromatic aberration can be established, thereby avoiding correction errors caused by the polynomial fitting method due to lens asymmetry.

In some optional embodiments, based on the above embodiment shown in FIG. 10, the determining centroid coordinates of the calibration reference object of each channel of any image block in step 2052 may include the following step: determining the centroid coordinates of the calibration reference object of each channel of any image block based on coordinates and a pixel value of a pixel in the image block.

The coordinates of a pixel may be position coordinates (x, y) of each pixel in the image block in an image coordinate system.

The pixel value may be a raw channel value of each pixel in the image block.

In some optional implementations, calculation formulas for centroid coordinates (x_{c}, y_{c}) are: x_{c} = Σ_{x, y}x × I(x, y)/Σ_{x, y}I(x, y), and y_{c} = Σ_{x, y}y × I(x, y)/Σ_{x, y}I(x, y), where x represents a horizontal coordinate of a pixel within the image block, y represents a vertical coordinate of the pixel, I(x, y) represents a weight value of the pixel, I(x, y) = 256 - an actual pixel value, the actual pixel value being a raw pixel value of the RGB channel, used for highlighting the black dot region (a smaller pixel value indicates a higher weight), Σ_{x, y}x × I(x, y) represents a sum of products of horizontal coordinates and corresponding weights of all pixels within the image block, and Σ_{x, y}I(x, y) represents a sum of weights of all the pixels within the image block. The subscript C in the formula represents a certain channel, that is, a certain channel of RGB. x is the horizontal coordinate and y is the vertical coordinate. In some cases, a coordinate range covering the black dot can be selected. For example, when the coordinate range of the black dot is [98:108, 98:108], a coordinate range of selected x, y is [94:112, 94:112], which is larger than the circular black dot by 4 on each of the top, bottom, left, and right sides. The transformation processing of I(x, y) = 256 - the actual pixel value allows the calibration reference object (such as the black dot) region to have a higher weight in the calculation, thereby effectively suppressing impacts of background noise and uneven illumination.

Based on this embodiment of the present disclosure, through determining of the centroid coordinates of the calibration reference object of each channel of any image block based on coordinates and a pixel value of a pixel in the image block, a visual perception center of each channel for a position of the calibration reference object within each image block can be precisely calculated. The centroid coordinates indicates the center-of-gravity position of the image, and a smaller pixel value indicates a shorter distance from the centroid to the black dot. In this way, accuracy and robustness of centroid coordinate calculation can be improved. In addition, because lateral chromatic aberration is manifested as differences in perception of the position of the calibration reference object by different channels, precise centroid coordinate calculation can improve precision of lateral chromatic aberration calibration.

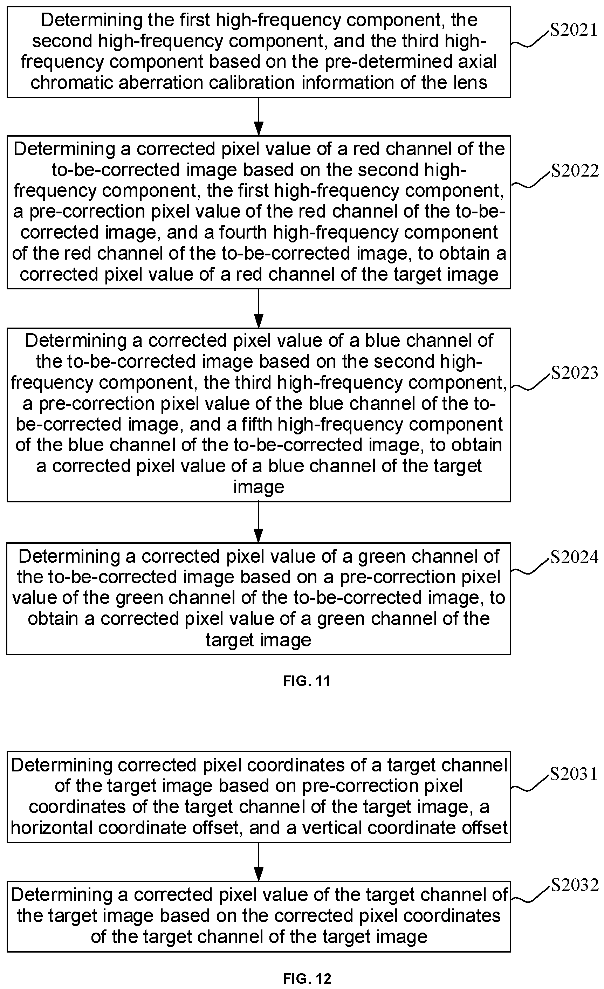

In some optional embodiments, as shown in FIG. 11, based on the above embodiment shown in FIG. 9, step 202 may include the following steps:
Step 2021: Determining the first high-frequency component, the second high-frequency component, and the third high-frequency component based on the pre-determined axial chromatic aberration calibration information of the lens.

In some optional implementations, values of the first high-frequency component, the second high-frequency component, and the third high-frequency component calculated during a calibration stage can be read from pre-stored axial chromatic aberration calibration information. Alternatively, the first high-frequency component, the second high-frequency component, and the third high-frequency component can be obtained through calculation based on the axial chromatic aberration calibration information.

Step 2022: Determining a corrected pixel value of a red channel of the to-be-corrected image based on the second high-frequency component, the first high-frequency component, a pre-correction pixel value of the red channel of the to-be-corrected image, and a fourth high-frequency component of the red channel of the to-be-corrected image, to obtain a corrected pixel value of a red channel of the target image.

The fourth high-frequency component may be a high-frequency component calculated for a current pixel of the red channel of the to-be-corrected image by using a high-frequency extraction operator the same as that in the calibration stage (for example, a Laplacian sharpening operator, a Sobel operator, or a Canny operator), and can be denoted as HF_R_Local.

The pre-correction pixel value of the red channel may be a raw pixel value of the red channel in the to-be-corrected image before axial chromatic aberration correction.

The corrected pixel value of the red channel may be a pixel value of the red channel obtained after axial chromatic aberration correction calculation.

In some optional implementations, the corrected pixel value of the red channel = the pre-correction pixel value of the red channel + HF_R_Local × HF_G/HF_R, where HF_R represents the first high-frequency component and HF_G represents the second high-frequency component.

Step 2023: Determining a corrected pixel value of a blue channel of the to-be-corrected image based on the second high-frequency component, the third high-frequency component, a pre-correction pixel value of the blue channel of the to-be-corrected image, and a fifth high-frequency component of the blue channel of the to-be-corrected image, to obtain a corrected pixel value of a blue channel of the target image.

The pre-correction pixel value of the blue channel may be a raw pixel value of the blue channel in the to-be-corrected image before axial chromatic aberration correction.

The corrected pixel value of the blue channel may be a pixel value of the blue channel obtained after axial chromatic aberration correction calculation.

The fifth high-frequency component may be a high-frequency component calculated for a current pixel of the blue channel of the to-be-corrected image by using a high-frequency extraction operator the same as that in the calibration stage, and can be denoted as HF_B_Local.

In some optional implementations, the corrected pixel value of the blue channel = the pre-correction pixel value of the blue channel + HF_B_Local × HF_G/HF_B, where HF_B represents the third high-frequency component and HF_G represents the second high-frequency component.

Step 2024: Determining a corrected pixel value of a green channel of the to-be-corrected image based on a pre-correction pixel value of the green channel of the to-be-corrected image, to obtain a corrected pixel value of a green channel of the target image.

In some optional implementations, the pre-correction pixel value of the green channel of the to-be-corrected image can be used as the corrected pixel value of the green channel of the to-be-corrected image, to obtain the corrected pixel value of the green channel of the target image.

Based on this embodiment of the present disclosure, through separate and targeted high-frequency component-based correction of the R channel and the B channel, sharpness differences between channels caused by axial chromatic aberration can be effectively eliminated, thereby improving overall image sharpness.

In some optional embodiments, the lateral chromatic aberration calibration information includes a horizontal coordinate offset and a vertical coordinate offset that correspond to a target channel of an image block of the lens, the target channel being a red channel or a blue channel.

A horizontal coordinate offset corresponding to the red channel is also referred to as a first horizontal coordinate offset.

A vertical coordinate offset corresponding to the red channel is also referred to as a first vertical coordinate offset.

A horizontal coordinate offset corresponding to the blue channel is also referred to as a second horizontal coordinate offset.

A vertical coordinate offset corresponding to the blue channel is also referred to as a second vertical coordinate offset.

On this basis, as shown in FIG. 12, based on the above embodiment shown in FIG. 2, step 203 may include the following steps:
Step 2031: Determining corrected pixel coordinates of a target channel of the target image based on pre-correction pixel coordinates of the target channel of the target image, a horizontal coordinate offset, and a vertical coordinate offset.

The pre-correction pixel coordinates may represent a raw coordinate position of a pixel of the target channel in the target image before correction processing.

The corrected pixel coordinates may represent a coordinate position to which a pixel of the target channel should be mapped after lateral chromatic aberration correction calculation.

In some optional implementations, the corrected pixel coordinates of the target channel can be denoted as (X_correct, Y_correct), the pre-correction pixel coordinates of the target channel can be denoted as (X_uncorrect, Y_uncorrect), the horizontal coordinate offset can be denoted as deltaX, and the vertical coordinate offset can be denoted as deltaY. In this case, X_correct = X_uncorrect - deltaX, and Y_correct = Y_uncorrect - deltaY.

Step 2032: Determining a corrected pixel value of the target channel of the target image based on the corrected pixel coordinates of the target channel of the target image.

In some optional implementations, the corrected pixel value of the target channel of the target image can be determined through an interpolation method based on the corrected pixel coordinates of the target channel of the target image.

Based on this embodiment of the present disclosure, through coordinate correction based on horizontal and vertical coordinate offsets, a color fringing phenomenon caused by lateral chromatic aberration can be effectively eliminated, thereby improving edge sharpness and color accuracy of the image.

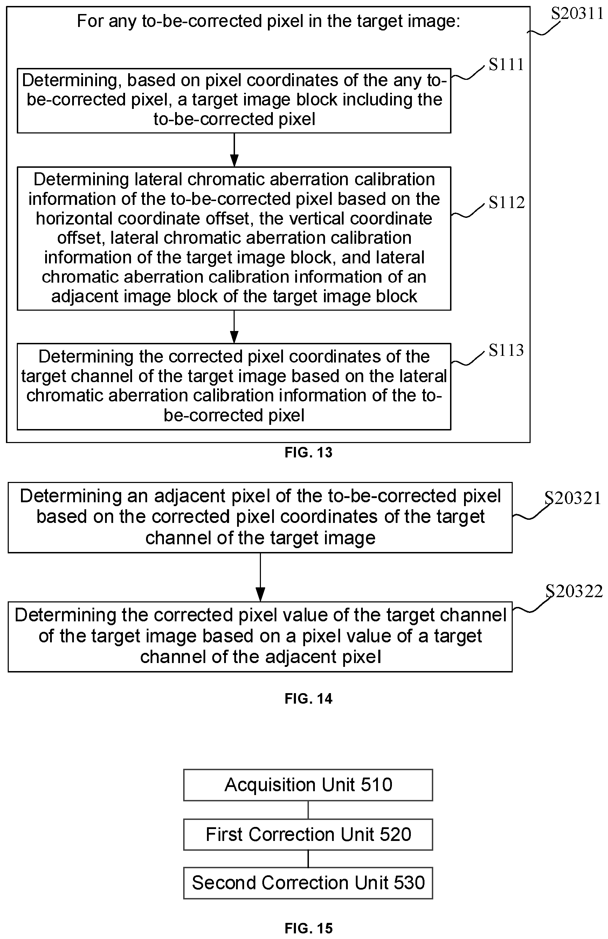

In some optional embodiments, as shown in FIG. 13, based on the above embodiment shown in FIG. 12, step 2031 may include the following steps:
Step 20311: For any to-be-corrected pixel in the target image, performing the following step 111 to step 113.

Step 111: Determining, based on pixel coordinates of the any to-be-corrected pixel, a target image block including the to-be-corrected pixel.

The to-be-corrected pixel may be a pixel in the target image that is to undergo lateral chromatic aberration correction processing.

The target image block may be an image block including the to-be-corrected pixel.

Step 112: Determining lateral chromatic aberration calibration information of the to-be-corrected pixel based on the horizontal coordinate offset, the vertical coordinate offset, lateral chromatic aberration calibration information of the target image block, and lateral chromatic aberration calibration information of an adjacent image block of the target image block.

The adjacent image block may be an image block adjacent to the target image block in spatial position.

The lateral chromatic aberration calibration information of the to-be-corrected pixel may include a horizontal coordinate offset and a vertical coordinate offset at the position of the pixel.

In some optional implementations, the lateral chromatic aberration calibration information at the position of the to-be-corrected pixel can be calculated through a bilinear interpolation method based on the lateral chromatic aberration calibration information (horizontal and vertical coordinate offsets) of the target image block and the adjacent image block of the target image block.

Step 113: Determining the corrected pixel coordinates of the target channel of the target image based on the lateral chromatic aberration calibration information of the to-be-corrected pixel.

In some optional implementations, the corrected pixel coordinates of the target channel of the target image can be obtained by subtracting the horizontal and vertical coordinate offsets in the lateral chromatic aberration calibration information of the to-be-corrected pixel from the pre-correction pixel coordinates of the to-be-corrected pixel.

On this basis, as shown in FIG. 14, based on the above embodiment shown in FIG. 13, step 2032 may include the following steps:
Step 20321: Determining an adjacent pixel of the to-be-corrected pixel based on the corrected pixel coordinates of the target channel of the target image.

In some optional implementations, pixels at integer coordinate positions around the corrected pixel coordinates (for example, pixels in a four-neighborhood or eight-neighborhood) can be determined based on the corrected pixel coordinates, thereby determining the adjacent pixel of the to-be-corrected pixel.

Step 20322: Determining the corrected pixel value of the target channel of the target image based on a pixel value of a target channel of the adjacent pixel.

In some optional implementations, the corrected pixel value of the target channel of the target image can be obtained through a bilinear interpolation method by performing weighted calculation on corrected pixel values based on the pixel value of the adjacent pixel.

In some optional implementations, a position of an image block in which the current to-be-corrected pixel is located can be first calculated.

For example, if coordinates of the to-be-corrected pixel in the target image are (1212, 1808), and a size of each image block is 120×160, 1221/120 = 10.1, and 1808/160 = 11.3. In this case, lateral chromatic aberration values corresponding to an image block at row 10 and column 11, an image block at row 11 and column 12, an image block at row 11 and column 11, and an image block at row 10 and column 12 can be taken, and respective weights of the image blocks can be calculated by using a bilinear interpolation method as 0.9 × 0.7 = 0.63, 0.1 × 0.3 = 0.03, 0.1 × 0.7 = 0.07, and 0.9 × 0.3 = 0.27.

Each image block corresponds to four lateral chromatic aberration values (that is, deltaXr = Xr - Xg, deltaYr = Yr - Yg, deltaXb = Xb - Xg, deltaYb = Yb - Yg). It is assumed that the lateral chromatic aberration values (integers after magnification by 128 times) of the four image blocks are:
at row 10 and column 11: deltaXr = -280, and deltaYr = -672;
at row 10 and column 12: deltaXr = -300, and deltaYr = -720;
at row 11 and column 11: deltaXr = -290, and deltaYr = -696; and
at row 11 and column 12: deltaXr = -310, and deltaYr = -744.

In this case, final chromatic aberration values of the pixel (1212, 1808) are obtained through interpolation calculation as follows:
$deltaXr = \left(-280\times 0.63\right) + \left(-300\times 0.27\right) + \left(-290\times 0.07\right) + \left(-310\times 0.03\right) \approx - 294$
$deltaYr = \left(-672\times 0.63\right) + \left(-720\times 0.27\right) + \left(-696\times 0.07\right) + \left(-744\times 0.03\right) \approx - 704$

After the lateral chromatic aberration value of the current pixel is obtained, a correction value of the pixel is calculated based on bilinear interpolation. For example, originally, a coordinate point of R (current pixel coordinate) is (1600, 1600). If the final lateral chromatic aberration values obtained through interpolation calculation based on the four image blocks are -294 and -704, the corrected coordinate point is (1600 - (-294/128), 1600 - (-704/128)), that is, (1602.3, 1605.5). In this case, R values of four points (1602, 1605), (1603, 1605), (1602, 1606), and (1603, 1606) can be taken, and a final corrected R value can be obtained through weighting based on distance weights (0.3 and 0.5). The fractional part 0.3 of the corrected horizontal coordinate (for example, 1602.3) indicates that a weight ratio of the pixel to a left integer coordinate (1602) in an x-axis direction is 0.7 (1 - 0.3), and a weight ratio of the pixel to a right integer coordinate (1603) is 0.3. The fractional part 0.5 of the corrected vertical coordinate (for example, 1605.5) indicates that weight ratios of the pixel to an upper integer coordinate (1605) and a lower integer coordinate (1606) in a y-axis direction are both 0.5.

Herein, 128 is a factor for magnifying a floating-point value of lateral chromatic aberration, and is used for converting a floating-point chromatic aberration value to an integer form for storage.

Specifically, it is assumed that the R values of the four pixels are: 200, 205, 210, and 215.

Weight calculation:
for the pixel (1602, 1605), a weight is 0.7 × 0.5 = 0.35;
for the pixel (1603, 1605), a weight is 0.3 × 0.5 = 0.15;
for the pixel (1602, 1606), a weight is 0.7 × 0.5 = 0.35; and
for the pixel (1603, 1606), a weight is 0.3 × 0.5 = 0.15.

Final corrected R value: 200 × 0.35 + 205 × 0.15 + 210 × 0.35 + 215 × 0.15, that is, 70 + 30.75 + 73.5 + 32.25 = 206.5.

Based on this embodiment of the present disclosure, through processing of the target image block and the adjacent image block of the target image block, precision and smoothness of lateral chromatic aberration correction can be improved, block effects that may be caused by block-based correction can be effectively avoided, and image detail integrity can be maintained. In this way, the corrected image presents a more natural and continuous visual effect in edge regions and transition regions.

Any one of the methods for image chromatic aberration correction provided in the embodiments of the present disclosure can be performed by any appropriate device having a data processing capability, including but not limited to: a terminal device, a server, and the like. Alternatively, any one of the methods for image chromatic aberration correction provided in the embodiments of the present disclosure can be performed by a processor. For example, the processor performs, by calling corresponding instructions stored in a memory, any one of the methods for image chromatic aberration correction mentioned in the embodiments of the present disclosure. This is not repeated below.

### Exemplary Apparatus

FIG. 15 is a schematic diagram illustrating a structure of an apparatus for image chromatic aberration correction according to an exemplary embodiment of the present disclosure. The apparatus for image chromatic aberration correction of the embodiments of the present disclosure can be used to implement the method for image chromatic aberration correction of any of the above embodiments. As shown in FIG. 15, the apparatus for image chromatic aberration correction of this embodiment includes:
an acquisition unit 510, configured for acquiring a to-be-corrected image captured through a lens;
a first correction unit 520, configured for performing axial chromatic aberration correction on the to-be-corrected image based on pre-determined axial chromatic aberration calibration information of the lens to obtain a target image; and
a second correction unit 530, configured for performing lateral chromatic aberration correction on the target image based on pre-determined lateral chromatic aberration calibration information of the lens.

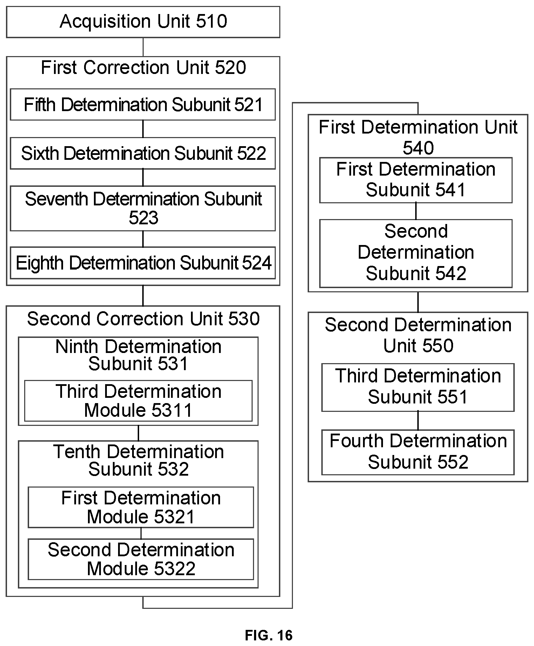

FIG. 16 is a schematic diagram illustrating a structure of an apparatus for image chromatic aberration correction according to another exemplary embodiment of the present disclosure. As shown in FIG. 16, based on the embodiment shown in FIG. 15, in some possible implementations, the apparatus further includes:
a first determination unit 540, configured for determining channel gradient information of a first image captured through the lens; and determining the axial chromatic aberration calibration information of the lens based on the channel gradient information; and
a second determination unit 550, configured for determining centroid coordinates of an image block in a second image captured through the lens; and determining lateral chromatic aberration calibration information of the lens based on the centroid coordinates.

In some optional implementations, the first determination unit 540 includes:
a first determination subunit 541, configured for determining a first high-frequency component of a red channel, a second high-frequency component of a green channel, and a third high-frequency component of a blue channel in a central region of the first image captured through the lens; and
a second determination subunit 542, configured for determining the channel gradient information of the first image based on the first high-frequency component, the second high-frequency component, and the third high-frequency component.

In some optional implementations, the second determination unit 550 includes:
a third determination subunit 551, configured for dividing the second image captured through the lens into a plurality of image blocks, any one of the image blocks including at least one calibration reference object; and
a fourth determination subunit 552, configured for determining, for any one of the plurality of image blocks, centroid coordinates of the calibration reference object of each channel of the any one of the image blocks.

In some optional implementations, the first correction unit 520 includes:
a fifth determination subunit 521, configured for determining the first high-frequency component, the second high-frequency component, and the third high-frequency component based on the pre-determined axial chromatic aberration calibration information of the lens;
a sixth determination subunit 522, configured for determining a corrected pixel value of a red channel of the to-be-corrected image based on the second high-frequency component, the first high-frequency component, a pre-correction pixel value of the red channel of the to-be-corrected image, and a fourth high-frequency component of the red channel of the to-be-corrected image, to obtain a corrected pixel value of a red channel of the target image;
a seventh determination subunit 523, configured for determining a corrected pixel value of a blue channel of the to-be-corrected image based on the second high-frequency component, the third high-frequency component, a pre-correction pixel value of the blue channel of the to-be-corrected image, and a fifth high-frequency component of the blue channel of the to-be-corrected image, to obtain a corrected pixel value of a blue channel of the target image; and
an eighth determination subunit 524, configured for determining a corrected pixel value of a green channel of the to-be-corrected image based on a pre-correction pixel value of the green channel of the to-be-corrected image, to obtain a corrected pixel value of a green channel of the target image.

In some optional implementations, the lateral chromatic aberration calibration information includes a horizontal coordinate offset and a vertical coordinate offset that correspond to a target channel of an image block of the lens, the target channel being a red channel or a blue channel; and
the second correction unit 530 includes:
a ninth determination subunit 531, configured for determining corrected pixel coordinates of a target channel of the target image based on pre-correction pixel coordinates of the target channel of the target image, the horizontal coordinate offset, and the vertical coordinate offset; and
a tenth determination subunit 532, configured for determining a corrected pixel value of the target channel of the target image based on the corrected pixel coordinates of the target channel of the target image.

In some optional implementations, the ninth determination subunit 531 includes:
a third determination module 5311, configured for: for any to-be-corrected pixel in the target image:
determining, based on pixel coordinates of the any to-be-corrected pixel, a target image block including the to-be-corrected pixel;
determining lateral chromatic aberration calibration information of the to-be-corrected pixel based on the horizontal coordinate offset, the vertical coordinate offset, lateral chromatic aberration calibration information of the target image block, and lateral chromatic aberration calibration information of an adjacent image block of the target image block; and
determining the corrected pixel coordinates of the target channel of the target image based on the lateral chromatic aberration calibration information of the to-be-corrected pixel.

The tenth determination subunit 532 includes:
a first determination module 5321, configured for determining an adjacent pixel of the to-be-corrected pixel based on the corrected pixel coordinates of the target channel of the target image; and
a second determination module 5322, configured for determining the corrected pixel value of the target channel of the target image based on a pixel value of a target channel of the adjacent pixel.

The exemplary apparatus embodiment corresponds to the above exemplary method section in terms of implementation, and the two can be cross-referenced, combined, and cited in corresponding content. This is not repeated herein. For beneficial technical effects corresponding to the exemplary embodiment of this apparatus, refer to the corresponding beneficial technical effects of the exemplary method section described above, which are not repeated herein.

### Exemplary Electronic Device

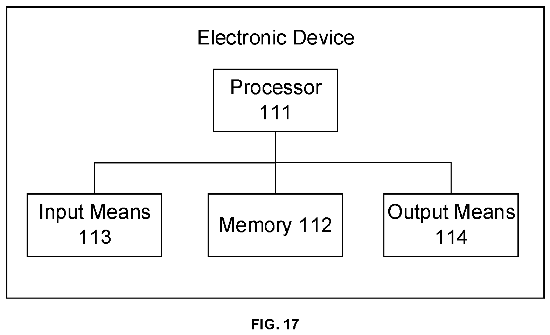

FIG. 17 is a diagram illustrating a structure of an electronic device according to an embodiment of the present disclosure. The electronic device includes at least one processor 111 and a memory 112.

The processor 111 may be a CPU (Central Processing Unit) or another form of processing unit having a data processing capability and/or an instruction execution capability, and may control another component in the electronic device to perform a desired function.

The memory 112 may include one or more computer program products. The computer program product may include various forms of computer readable storage media, such as a volatile memory and/or a non-volatile memory. The volatile memory may include, for example, a RAM (Random Access Memory) and/or a cache. The non-volatile memory may include, for example, a ROM, a hard disk, or a flash memory. The computer readable storage medium may store one or more computer program instructions. The processor 111 may run the one or more computer program instructions to implement the method for image chromatic aberration correction and/or other desired functions in the above embodiments of the present disclosure.

In an example, the electronic device may further include: an input means 113 and an output means 114. The components are interconnected through a bus system and/or other forms of connection mechanisms (not shown).

The input means 113 may further include, for example, a keyboard or a mouse.

The output means 114 may output various information to the outside, and may include, for example, a display, a speaker, a printer, and a communication network and a remote output device connected thereto.

Certainly, for simplicity, only some components in the electronic device that are related to the present disclosure are shown in FIG. 17, and components such as a bus and an input/output interface are omitted. Besides, the electronic device may further include any other appropriate components depending on specific applications.

### Exemplary Computer Program Product And Computer Readable Storage Medium

In addition to the foregoing method and device, the embodiments of the present disclosure may also provide a computer program product including computer program instructions that, when run by a processor, cause the processor to perform the steps of the method for image chromatic aberration correction according to the embodiments of the present disclosure that is described in the above "Exemplary Method" section.

The computer program product may be program code, written with one or any combination of a plurality of programming languages, which is configured for performing the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when run by a processor, cause the processor to perform the steps of the method for image chromatic aberration correction according to the embodiments of the present disclosure that is described in the above "Exemplary Method" section.

The computer readable storage medium may be one readable medium or any combination of a plurality of readable media. The readable medium may be a readable signal medium or a readable storage medium. The readable storage medium includes, for example, but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a RAM, a ROM, an erasable programmable ROM (an EPROM or a flash memory), an optical fiber, a portable compact disk ROM (CD-ROM), an optical storage device, a magnetic storage device, or any suitable combination of the above.

Basic principles of the present disclosure are described above in combination with specific embodiments. However, the advantages, superiorities, effects, and the like mentioned in the present disclosure are merely examples rather than limitations, and it should not be considered that these advantages, superiorities, effects, and the like are necessary for each of the embodiment of the present disclosure. In addition, specific details disclosed above are merely for examples and for ease of understanding, rather than limitations. The details described above do not limit that the present disclosure must be implemented by using the foregoing specific details.

A person skilled in the art may make various modifications and variations to the present disclosure without departing from the spirit and scope of this application. The present disclosure is intended to cover these modifications and variations provided that they fall within the scope of protection defined by the claims of the present disclosure or equivalents thereof.

## Claims

1. A method for image chromatic aberration correction, the method comprising:
acquiring (201) a to-be-corrected image captured through a lens;
performing (202) axial chromatic aberration correction on the to-be-corrected image based on pre-determined axial chromatic aberration calibration information of the lens to obtain a target image; and
performing (203) lateral chromatic aberration correction on the target image based on pre-determined lateral chromatic aberration calibration information of the lens.

2. The method according to claim 1, wherein before the performing (202) axial chromatic aberration correction on the to-be-corrected image based on pre-determined axial chromatic aberration calibration information of the lens, the method further comprises:
determining (204) channel gradient information of a first image captured through the lens; and determining the axial chromatic aberration calibration information of the lens based on the channel gradient information; and
determining (205) centroid coordinates of an image block in a second image captured through the lens; and determining the lateral chromatic aberration calibration information of the lens based on the centroid coordinates.

3. The method according to claim 2, wherein the determining (204) channel gradient information of a first image captured through the lens comprises:
determining (2041) a first high-frequency component of a red channel, a second high-frequency component of a green channel, and a third high-frequency component of a blue channel in a central region of the first image captured through the lens; and
determining (2042)the channel gradient information of the first image based on the first high-frequency component, the second high-frequency component, and the third high-frequency component.

4. The method according to claim 2, wherein the determining (205) centroid coordinates of an image block in a second image captured through the lens comprises:
dividing (2051) the second image captured through the lens into a plurality of image blocks, any one of the image blocks comprising at least one calibration reference object; and
determining (2052), for any one of the plurality of image blocks, centroid coordinates of the calibration reference object of each channel of the any one of the image blocks.

5. The method according to claim 3, wherein the performing (202) axial chromatic aberration correction on the to-be-corrected image based on pre-determined axial chromatic aberration calibration information of the lens to obtain a target image comprises:
determining (2021) the first high-frequency component, the second high-frequency component, and the third high-frequency component based on the pre-determined axial chromatic aberration calibration information of the lens;
determining (2022) a corrected pixel value of a red channel of the to-be-corrected image based on the second high-frequency component, the first high-frequency component, a pre-correction pixel value of the red channel of the to-be-corrected image, and a fourth high-frequency component of the red channel of the to-be-corrected image, to obtain a corrected pixel value of a red channel of the target image;
determining (2023) a corrected pixel value of a blue channel of the to-be-corrected image based on the second high-frequency component, the third high-frequency component, a pre-correction pixel value of the blue channel of the to-be-corrected image, and a fifth high-frequency component of the blue channel of the to-be-corrected image, to obtain a corrected pixel value of a blue channel of the target image; and
determining (2024) a corrected pixel value of a green channel of the to-be-corrected image based on a pre-correction pixel value of the green channel of the to-be-corrected image, to obtain a corrected pixel value of a green channel of the target image.

6. The method according to any one of claims 1 to 5, wherein the lateral chromatic aberration calibration information comprises a horizontal coordinate offset and a vertical coordinate offset that correspond to a target channel of an image block of the lens, the target channel being a red channel or a blue channel; and
the performing (203) lateral chromatic aberration correction on the target image based on pre-determined lateral chromatic aberration calibration information of the lens comprises:
determining (2031) corrected pixel coordinates of a target channel of the target image based on pre-correction pixel coordinates of the target channel of the target image, the horizontal coordinate offset, and the vertical coordinate offset; and
determining (2032) a corrected pixel value of the target channel of the target image based on the corrected pixel coordinates of the target channel of the target image.

7. The method according to claim 6, wherein the determining (2031) corrected pixel coordinates of a target channel of the target image based on pre-correction pixel coordinates of the target channel of the target image, the horizontal coordinate offset, and the vertical coordinate offset comprises:
for any to-be-corrected pixel in the target image:
determining (111), based on pixel coordinates of the any to-be-corrected pixel, a target image block comprising the to-be-corrected pixel;
determining (112) lateral chromatic aberration calibration information of the to-be-corrected pixel based on the horizontal coordinate offset, the vertical coordinate offset, lateral chromatic aberration calibration information of the target image block, and lateral chromatic aberration calibration information of an adjacent image block of the target image block; and
determining (113) the corrected pixel coordinates of the target channel of the target image based on the lateral chromatic aberration calibration information of the to-be-corrected pixel; and
the determining (2032) a corrected pixel value of the target channel of the target image based on the corrected pixel coordinates of the target channel of the target image comprises:
determining (20321) an adjacent pixel of the to-be-corrected pixel based on the corrected pixel coordinates of the target channel of the target image; and
determining (20322) the corrected pixel value of the target channel of the target image based on a pixel value of a target channel of the adjacent pixel.

8. An apparatus for image chromatic aberration correction, the apparatus comprising:
an acquisition unit (510), configured for acquiring a to-be-corrected image captured through a lens;
a first correction unit (520), configured for performing axial chromatic aberration correction on the to-be-corrected image based on pre-determined axial chromatic aberration calibration information of the lens to obtain a target image; and
a second correction unit (530), configured for performing lateral chromatic aberration correction on the target image based on pre-determined lateral chromatic aberration calibration information of the lens.

9. The apparatus according to claim 8, wherein the apparatus further comprises:
a first determination unit (540), configured for determining channel gradient information of a first image captured through the lens; and determining the axial chromatic aberration calibration information of the lens based on the channel gradient information; and
a second determination unit 550, configured for determining centroid coordinates of an image block in a second image captured through the lens; and determining the lateral chromatic aberration calibration information of the lens based on the centroid coordinates.

10. The apparatus according to claim 9, wherein the first determination unit (540) comprises:
a first determination subunit (541), configured for determining a first high-frequency component of a red channel, a second high-frequency component of a green channel, and a third high-frequency component of a blue channel in a central region of the first image captured through the lens; and
a second determination subunit (542), configured for determining the channel gradient information of the first image based on the first high-frequency component, the second high-frequency component, and the third high-frequency component.

11. The apparatus according to claim 9, wherein the second determination unit (550) comprises:
a third determination subunit (551), configured for dividing the second image captured through the lens into a plurality of image blocks, any one of the image blocks comprising at least one calibration reference object; and
a fourth determination subunit (552), configured for determining, for any one of the plurality of image blocks, centroid coordinates of the calibration reference object of each channel of the any one of the image blocks.

12. The apparatus according to claim 10, wherein the first correction unit (520) comprises:
a fifth determination subunit (521), configured for determining the first high-frequency component, the second high-frequency component, and the third high-frequency component based on the pre-determined axial chromatic aberration calibration information of the lens;
a sixth determination subunit (522), configured for determining a corrected pixel value of a red channel of the to-be-corrected image based on the second high-frequency component, the first high-frequency component, a pre-correction pixel value of the red channel of the to-be-corrected image, and a fourth high-frequency component of the red channel of the to-be-corrected image, to obtain a corrected pixel value of a red channel of the target image;
a seventh determination subunit (523), configured for determining a corrected pixel value of a blue channel of the to-be-corrected image based on the second high-frequency component, the third high-frequency component, a pre-correction pixel value of the blue channel of the to-be-corrected image, and a fifth high-frequency component of the blue channel of the to-be-corrected image, to obtain a corrected pixel value of a blue channel of the target image; and
an eighth determination subunit (524), configured for determining a corrected pixel value of a green channel of the to-be-corrected image based on a pre-correction pixel value of the green channel of the to-be-corrected image, to obtain a corrected pixel value of a green channel of the target image.

13. The apparatus according to any one of claims 1 to 12, wherein the lateral chromatic aberration calibration information comprises a horizontal coordinate offset and a vertical coordinate offset that correspond to a target channel of an image block of the lens, the target channel being a red channel or a blue channel; and
the second correction unit (530) comprises:
a ninth determination subunit (531), configured for determining corrected pixel coordinates of a target channel of the target image based on pre-correction pixel coordinates of the target channel of the target image, the horizontal coordinate offset, and the vertical coordinate offset; and
a tenth determination subunit (532), configured for determining a corrected pixel value of the target channel of the target image based on the corrected pixel coordinates of the target channel of the target image.

14. A non-transitory computer readable storage medium, on which a computer program is stored, wherein the computer program, when executed by a processor (111), causes the processor (111) to implement the method according to any one of claims 1 to 7.

15. An electronic device, comprising:
a processor (111); and
a memory (112), configured for storing instructions executable by the processor (111), wherein
the processor (111) is configured for reading the executable instructions from the memory (112), and executing the instructions to implement the method according to any one of claims 1 to 7.
